# EUROPÄISCHE PATENTSCHRIFT

(11) **EP 1 260 490 B1**
(45) Veröffentlichungstag und Bekanntmachung des Hinweises auf die Patenterteilung: **02.08.2006**
(21) Anmeldenummer: 02010117.6
(22) Anmeldetag: 08.05.2002
(51) Int. Cl.: C04B 28/00

(54) **Trockenmörtelformulierung**
Dry mortar mixture
Mortier sec

(30) Priorität: 17.05.2001 DE 10123938
(43) Veröffentlichungstag der Anmeldung: 27.11.2002
(73) Patentinhaber: Wacker Polymer Systems GmbH & Co. KG, 84489 Burghausen (DE)
(72) Erfinder: Dietrich, Ulf, Dr., 84489 Burghausen (DE); Mayer, Theo, Dr., 84387 Julbach (DE)
(74) Vertreter: Schuderer, Michael

(56) Entgegenhaltungen:
- EP-A- 0 751 175
- DE-A- 19 730 953
- DE-A- 19 843 730

## Beschreibung

Die Erfindung betrifft mit in Wasser redispergierbaren Polymerpulvern modifizierte Trockenmörtelformulierungen, welche bei deren Verwendung als Klebemittel und Beschichtungsmittel verbesserte Haftzugseigenschaften zeigen.

Gemische aus hydraulischen Bindemitteln, beispielsweise Zement oder Gips, und in Wasser redispergierbaren Polymerpulvern (Redispersionspulver) sind bekannt. Das Redispersionspulver wird als organisches Bindemittel zugesetzt um die Haftung zum Substrat und die Flexibilität der Schicht zu verbessern. Weitere Bestandteile dieser Mischungen sind Füllstoffe sowie Verdickungsmittel zur Steuerung der rheologischen Eigenschaften. Herkömmliche Zusatzstoffe sind noch Dispergierhilfsmittel, Zementverflüssiger sowie Zusätze zur Beschleunigung oder Verzögerung der Abbindung. Ein Beispiel für eine Mörtelgrundstoffmischung ist in der DE-A 1951171 angegeben.

Solche Gemische werden nach Anrühren mit Wasser beispielsweise in Bauklebern wie Fliesenkleber oder Wärmedämmverbundsystemkleber, Spachtelmassen, Bodenausgleichsmassen, Dichtungsschlämmen, Armierungsmörtel für Wärmedämmverbundsysteme und als Klebstoffe zum Verkleben von Holzparkett eingesetzt. Nachteilig ist, daß die Haftzugsfestigkeiten bei der Anwendung solcher Mörtelmassen nicht voll zufriedenstellen können. Insbesondere ist oftmals nach längerer Lagerung der Trockenmörtel eine Abnahme der Haftzugsfestigkeiten bei der Anwendung festzustellen.

Aus der DE-A 19843730 und der EP-B 751175 ist bekannt, daß durch Zusatz von Antioxidantien die Selbstentzündung von Polymerpulver verhindert werden kann.

Der Erfindung lag die Aufgabe zugrunde, Trockenmörtelformulierungen zur Verfügung zu stellen, die bei der Anwendung als Klebemittel oder Beschichtungsmittel gute Haftzugsfestigkeit bewirken.

Gegenstand der Erfindung sind Trockenmörtelformulierungen, enthaltend
a) 0.5 bis 80 Gew.-% hydraulisches Bindemittel,
b) 0 bis 97 Gew.-% Füllstoffe,
c) 0 bis 3.5 Gew.-% Verdickungsmittel,
d) 1.0 bis 80 Gew.-% redispergierbares Polymerpulver,
   dadurch gekennzeichnet, daß
e) 0.0001 bis 1.0 Gew.-%, ein oder mehrere Verbindungen aus der Gruppe der Antioxidantien enthalten sind, jeweils bezogen auf das Gesamtgewicht des Trockenmörtels und
wobei sich die Angaben in Gew.-% auf 100 Gew.-% aufaddieren.

Der Anteil an hydraulischem Bindemittel a) beträgt vorzugsweise 0.5 bis 70 Gew.-%, besonders bevorzugt 8 bis 50 Gew.-%. Im allgemeinen wird Zement oder Gips eingesetzt. Vorzugsweise wird Portland-Zement eingesetzt.

Geeignete Füllstoffe b) sind Quarzsand, Quarzmehl, Calciumcarbonat, Dolomit, Aluminiumsilicate, Talkum oder Glimmer, oder auch Leichtfüllstoffe wie Bims, Schaumglas, Gasbeton, Perlite oder Vermiculite, oder auch Füllstoffe auf Basis von Natur- oder Kunstfaser. Es können auch Gemische der genannten Füllstoffe eingesetzt werden. Vorzugsweise beträgt der Füllstoffanteil 10 bis 90 Gew.-%, besonders bevorzugt 40 bis 90 Gew.-%, am meisten bevorzugt 75 bis 90 Gew.-%.

Beispiele für Verdickungsmittel c) sind Polysaccharide wie Celluloseether und modifizierte Celluloseether, Stärkeether, Guar Gum oder Xanthan Gum, Schichtsilikate, Polycarbonsäuren wie Polyacrylsäure und deren Teilester, Polyvinylalkohole welche gegebenenfalls acetalisiert und/oder hydrophob modifiziert sein können, Casein und assoziativ wirkende Verdicker. Es können auch Gemische der genannten Verdickungsmittel eingesetzt werden. Bevorzugt werden die Celluloseether, die modifizierten Celluloseether, die Polyvinylalkohole welche gegebenenfalls acetalisiert und/oder hydrophob modifiziert sein können, sowie deren Gemische. Vorzugsweise werden 0.05 bis 2.5 Gew.-%, besonders bevorzugt 0.05 bis 0.8 Gew.-% Verdickungsmittel eingesetzt.

Als in Wasser redispergierbare Polymerpulver d) werden solche bezeichnet, die in Wasser wieder in die Primärteilchen zerfallen, welche dann im Wasser dispergiert werden. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide. Es können auch Gemische der genannten Polymere eingesetzt werden. Vorzugsweise werden 1 bis 10 Gew.-% in Wasser redispergierbare Polymerpulver d) eingesetzt.

Bevorzugte Vinylester sind Vinylacetat, Vinylpropionat, Vinylbutyrat, Vinyl-2-Ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R}, VeoVa9^{R} , VeoVa10^{R} oder VeoVa11^{R} (Handelsname der Fa. Shell). Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können die Polymerisate noch 0.1 bis 10 Gew.-%, bezogen auf das Gesamtgewicht des Polymerisats, funktionelle Comonomereinheiten enthalten aus der Gruppe der ethylenisch ungesättigten Mono- oder Dicarbonsäuren wie Acrylsäure; der ethylenisch ungesättigten Carbonsäureamide wie (Meth)Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether.

Als Polymerisate werden die nachstehend aufgeführten besonders bevorzugt, wobei sich die Angaben in Gewichtsprozent, gegebenenfalls mit dem Anteil an funktionellen Comonomereinheiten, auf 100 Gew.-% aufaddieren:
Aus der Gruppe der Vinylester-Polymerisate Vinylacetat-Polymerisate, Vinylacetat-Ethylen-Copolymere mit einem Ethylengehalt von 1 bis 60 Gew.-%; Vinylester-Ethylen-Vinylchlorid-Copolymere mit einem Ethylengehalt von 1 bis 40 Gew.-% und einem Vinylchlorid-Gehalt von 20 bis 90 Gew.-%; Vinylacetat-Copolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-(Meth)acrylsäureester-Copolymerisate mit 1 bis 60 Gew.-% (Meth)acrylsäureester, insbesonders Methylmethacrylat oder n-Butylacrylat oder 2-Ethylhexylacrylat, welche gegebenenfalls noch 1 bis 40 Gew.-% Ethylen enthalten.

Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat, Copolymerisate von Methylmethacrylat mit 1,3-Butadien.

Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere.

Aus der Gruppe der Styrol-Polymerisate Styrol-1,3-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.

Am meisten bevorzugt werden Styrol-1,3-Butadien-Copolymere mit einem Styrol-Gehalt von 10 bis 70 Gew.-% und einem 1,3-Butadien-Gehalt von 30 bis 90 Gew.-%, welche gegebenenfalls noch die obengenannten funktionellen Comonomereinheiten enthalten, und wobei sich die Anteile in Gew.-% auf 100 Gew.-% aufaddieren.

Wässrige Polymerdispersionen und die daraus mittels Trocknung erhältlichen in Wasser redispergierbaren Redispersionspulver der obengenannten Polymerisate sind bekannt und im Handel erhältlich. Die Herstellung der Polymerisate erfolgt in an sich bekannter Weise, vorzugsweise nach dem Emulsionspolymerisationsverfahren. Es können sowohl mit Emulgator stabilisierte Dispersionen eingesetzt werden, als auch mit Schutzkolloid, beispielsweise Polyvinylalkohol, stabilisierte. Bevorzugt werden mit Schutzkolloid stabilisierte Redispersionspulver, insbesondere solche, welche mit teilverseiften Polyvinylalkoholen oder mit teilverseiften, hydrophob modifizierten Polyvinylalkoholen, jeweils mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) stabilisiert sind. Zur Herstellung der in Wasser redispergierbaren Polymerpulver wird die Polymerdispersion getrocknet, vorzugsweise mittels Sprühtrocknung.

Geeignete Antioxidantien e) sind aus der Fachliteratur (Ullmanns Encyclopedia of Industrial Chemistry Vol. A3, Seite 91 ff., 1985) bekannt und im Handel erhältlich. Üblicherweise eingesetzt werden sterisch gehinderte Phenole oder Hydrochinone, aromatische Amine wie Diarylamine, Arylamin-Keton-Kondensationsprodukte, Organoschwefelverbindungen wie Dialkyldithiocarbaminsäuren oder Dialkyldithiophosphite, Organophosphorverbindungen wie Phosphite oder Phosphonite. Vorzugsweise beträgt der Anteil des Antioxidans e) in der Trockenmörtelformulierung 0.001 bis 0.1 Gew.-%.

Beispiele für sterisch gehinderte Phenole sind alkylierte Phenole wie 2-t-Butyl-4,6-dimethylphenol, 2,6-Dioctadecyl-4-methylphenol, ortho-tert-Butylphenol, 3,5-Bis(1,1-dimethylethyl)-4-hydroxybenzol-propionsäureester von C₄-C₂₂-Alkoholen, 2-Methyl-4,6-bis((octylthio)-methyl)phenol, 3,5-Bis(1,1-ditert.-butyl)-4-hydroxyphenyl-propionsäureester von C₄-C₂₂- Alkoholen; oder Alkylidenbisphenole wie 2,2'-Methylen-bis-(6-tert-butyl-4-methylphenol), 1,1-Bis-(5-t-butyl-4-hydroxy-2-methylphenyl)-butan; oder phenolische Benzylverbindungen wie 1,3,5-Tri-(3,5-di-t-butyl-4-hydroxybenzyl)-2,4,6-trimethylbenzol, 1,3,5-Tris-(4-t-butyl-3-hydroxy-2,6-dimethylbenzyl)-isocyanurat; oder 3,5-Di-t-butyl-4-hydroxyphenyl-propionsäureester, 5-t-Butyl-4-hydroxy-3-methylphenyl-propionsäureester, 3,5-Di-t-butyl-4-hydroxyphenyl-propionsäureamide, 3,5-Di-(1,1-dimethylethyl)-4-hydroxybenzolpropionsäureester. Beispiele für sterisch gehinderte Hydrochinone sind 2,6-Di-t-butyl-4-methoxyphenol, 2,5-Di-t-butyl-hydrochinon. Beispiele für aromatische Amine und Arylamin-Keton-Kondensationsprodukte sind N,N'-Bis-(1,4-dimethyl-pentyl)-p-phenylen-diamin, N,N'-Diphenyl-pphenylendiamin, 4-(p-Toluol-sulfonamido)-diphenylamin, 4-n-Butylaminophenol. Beispiele für Organoschwefelverbindungen sind 4,4'-Thio-bis-(6-t-butyl-3-methylphenol), Di-Lauryl-3,3'-thiodipropionat, Di-Stearyl-3,3'-thiodipropionat. Beispiele für Organophosphorverbindungen sind 3,5-Di-t-butyl-4-hydroxybenzyl-phosphonsäure-dioctadecylester, Trimethylphosphit, Triethylphosphit, Triphenylphosphit.

Die Trockenmörtelformulierung kann darüber hinaus noch bis zu 5 Gew.-% weitere Additive wie Beschleuniger, Verzögerer, Dispergiermittel, Stellmittel, Luftporenbildner und Naturoder Polymerfasern enthalten.

Am meisten bevorzugt werden Zusammensetzungen mit
a) 8 bis 50 Gew.-% Zement,
b) 40 bis 90 Gew.-% ein oder mehrere Füllstoffe aus der Gruppe umfassend Calciumcarbonat und/oder Quarzsand,
c) 0.05 bis 0.8 Gew.-% ein oder mehrere Verdickungsmittel aus der Gruppe umfassend Celluloseether, modifizierte Celluloseether, Polyvinylalkohole, acetalisierte und/oder hydrophob modifizierte Polyvinylalkohole,
d) 1 bis 10 Gew.-% mit Polyvinylalkohol stabilisiertes Redispersionspulver auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide, und mit
e) 0.001 bis 0.1 Gew.-%, eines oder mehrerer Antioxidantien aus der Gruppe der sterisch gehinderte Phenole oder Hydrochinone, aromatischen Amine, Organoschwefelverbindungen, der Phosphite und Phosphonite,
wobei die Anteile a) bis e) jeweils auf das Gesamtgewicht des Trockenmörtels bezogen sind und sich auf 100 Gew.-% aufaddieren.

Die Herstellung der Trockenmörtelformulierung erfolgt im allgemeinen so, daß die Komponenten a) bis e) in herkömmlichen Pulvermischvorrichtungen zu einem Trockenmörtel vermischt und homogenisiert werden. Die zur Verarbeitung erforderliche Menge Wasser wird unmittelbar vor der Verarbeitung hinzugefügt. Das Antioxidans e) kann auch vorab dem Redispersionspulver d) oder bei der Sprühtrocknung zur Herstellung des Redispersionspulvers d) zugegeben werden, und anschließend mit den übrigen Komponenten des Trockenmörtels vermischt werden.

Die mit der Trockenmörtelformulierung erhältlichen Mörtelmassen eignen sich als Klebemittel, vorzugsweise Bauklebemittel, insbesondere als Fliesenkleber und als Klebemittel zur Verklebung von Wärmedämmplatten und Schallschutzplatten. Weitere Anwendungen sind die als Armierungsmasse für Wärmedämmverbundsysteme, als Spachtelmasse und als Beschichtungsmittel (Putze), sowie das Verkleben von Holz und Holzwerkstoffen, beispielsweise mit Wärmedämmplatten, und als Dichtungsschlämme.

Besonders bevorzugt ist auch die Anwendung in gipshaltigen Zusammensetzungen wie Gipsputzen und Gipsspachtelmassen. Üblicherweise enthalten solche Zusammensetzungen 15 bis 80 Gew.-% Gips (Anhydrit), 3 bis 97 Gew.-% Füllstoffe, 0 bis 5 Gew.-% Kalkhydrat, 0.01 bis 3 Gew.-% Verdicker, 0 bis 5 Gew.-% Redispersionspulver und 0 bis 2 Gew.-% weitere Additive (z. B. Verzögerer).

Zur Testung wurden folgende Trockenmörtelformulierungen hergestellt:

### Beispiel 1:

| | |
|---|---|
| 300.0 g | Zement (OPC CEM 42.5) (a) |
| 150.0 g | Quarzsand (Nr. 12) (b) |
| 465.0 g | Quarzsand (F 32) (b) |
| 3.0 g | Celluloseether-Verdicker (Tylose FL 15002) (c) |
| 48.3 g | Redispersionspulver (Polyvinylalkohol-stabilisiertes Styrol-1,3-Butadien-Copolymer) (d) |
| 0.05 g | Antioxidans (Anox® BF = 3,5-Bis(1,1-di-t-butyl4-hydroxyphenyl)-propionsäureester von C₁₄-C₁₅Alkoholen) (e) |

Die Trockenmörtelformulierung wurde sofort nach Abmischung zu einem Baukleber verarbeitet.

### Vergleichsbeispiel 2:

| | |
|---|---|
| 300.0 g | Zement (OPC CEM 42.5) (a) |
| 150.0 g | Quarzsand (Nr. 12) (b) |
| 465.0 g | Quarzsand (F 32) (b) |
| 3.0 g | Celluloseether-Verdicker (Tylose FL 15002) (c) |
| 48.3 g | Redispersionspulver (Polyvinylalkohol-stabilisiertes Styrol-1,3-Butadien-Copolymer) (d) |

Die Trockenmörtelformulierung wurde sofort nach Abmischung zu einem Baukleber verarbeitet.

### Beispiel 3:

Eine Trockenmörtelformulierung gemäß Beispiel 1 wurde 21 Tage unter Luftzutritt bei 50°C gelagert.

### Vergleichsbeispiel 4:

Eine Trockenmörtelformulierung gemäß Vergleichsbeispiel 2 wurde 21 Tage unter Luftzutritt bei 50°C gelagert.

Zur Prüfung der mechanischen Werte wurde aus den Trockenmörtelformulierungen, zum einen jeweils sofort nach Abmischung, zum andern jeweils nach Ablauf der Lagerungszeit und Abkühlung auf Raumtemperatur, mittels Einmischen von jeweils 240 g Wasser ein Bauklebemittel hergestellt.

### Bestimmung der Haftzugswerte:

Zur Testung wurden die Baukleber gemäß (Vergleichs)beispiel 1 bis 4 jeweils mit einer 5mm-Zahnspachtel auf Betongehwegplatten aufgezogen. Danach wurden jeweils 5 Fliesen (5 x 5 cm) eingelegt und 30 sec lang mit einem 2 kg schweren Gewicht beschwert.

Die Haftzugswerte wurden jeweils nach folgenden Lagerungsbedingungen gemäß DIN CEN 1897 überprüft:
Normklimalagerung (NK):
   28 Tage bei 23°C und 50 % Luftfeuchte.
Naßlagerung (NL):
   7 Tage Normklimalagerung und anschließend 21 Tage Lagerung bei 20°C in Wasser.
Wärmelagerung (WL):
   14 Tage Normklimalagerung und anschließend 14 Tage Lagerung bei 70°C.
Frost-Tau-Lagerung (FT):
   7 Tage Normklimalagerung, anschließend 21 Tage Lagerung bei 20°C in Wasser, anschließend 25 Frost-Tau-Wechsel von Frostlagerung bei -15°C zu Wasserlagerung bei +20°C für jeweils 2
Stunden.

Die Bestimmung der Haftzugswerte erfolgte gemäß DIN 18156 jeweils nach der obengenannten Lagerung mit einem Abzugsgerät der Firma Herion mit einer Laststeigerungsrate von 250 N/s. Die Meßwerte in N/mm² stellen Mittelwerte aus 5 Messungen dar.

**Tabelle:**

| Lagerungsbedingungen | Beispiel 1 (N/mm²) | V.bsp. 2 (N/mm²) | Beispiel 3 (N/mm²) | V.Bsp. 4 (N/mm²) |
|---|---|---|---|---|
| Normklimalagerung NK | 2.31 | 2.26 | 2.28 | 1.09 |
| Naßlagerung NL | 1.38 | 1.14 | 1.33 | 0.88 |
| Wärmelagerung WL | 1.80 | 1.67 | 1.88 | 0.38 |
| Frost-Tau-Lagerung | 1.29 | 1.16 | 1.32 | 1.17 |

Die Testergebnisse zeigen, daß mit der erfindungsgemäßen Trockenmörtelformulierung, unabhängig von der Lagerungszeit des Trockenmörtels, hohe Haftzugswerte beim Einsatz in Baustoffmassen erzielt werden. Die Vergleichsformulierung verliert dagegen deutlich an mechanischer Festigkeit bei deren Anwendung.

### Beispiel für einen Gipshandputz:

| | |
|---|---|
| 700.0 g | Primoplast (Hilliges Gipswerke) (a) |
| 224.3 g | Quarzsand (Nr. 7) (b) |
| 25.0 g | Leichfüllstoff (Perlite 3,0 mm) (b) |
| 35.0 g | Kalkhydrat (Walhalla) |
| 0.4 g | Verzögerer (Retardan P) |
| 2.0 g | Celluloseether-Verdicker (Tylose FL 15002) (c) |
| 0.3 g | Stärkeether (Walocel VP-ST 2793) |
| 13.0 g | Redispersionspulver (d) |
| 0.05 g | Antioxidans (Anox® BF) (e) |

### Beispiel für eine Gipsspachtelmasse:

| | |
|---|---|
| 320.0 g | Primoplast (Hilliges Gipswerke) (a) |
| 621.0 g | Carbonat-Füllstoff (Omyacarb 2-BG) (b) |
| 30.0 g | Glimmer (micafine, Type 2002) (b) |
| 35.0 g | Kalkhydrat (Walhalla) |
| 0.5 g | Beschleuniger (Kaliumhydrogenphosphat) |
| 3.0 g | Celluloseether-Verdicker (Walocel MKX4000PF50) (c) |
| 0.5 g | Stärkeether (Walocel VP-ST 2793) (c) |
| 15.0 g | Redispersionspulver (d) |
| 0.05 g | Antioxidans (Anox® BF) (e) |

## Patentansprüche

1. Trockenmörtelformulierungen, enthaltend
a) 0.5 bis 80 Gew.-% hydraulisches Bindemittel,
b) 0 bis 97 Gew.-% Füllstoffe,
c) 0 bis 3.5 Gew.-% Verdickungsmittel,
d) 1.0 bis 80 Gew.-% redispergierbares Polymerpulver,
**dadurch gekennzeichnet, daß**
e) 0.0001 bis 1.0 Gew.-%, ein oder mehrere Verbindungen aus der Gruppe der Antioxidantien enthalten sind, jeweils bezogen auf das Gesamtgewicht des Trockenmörtels und wobei sich die Angaben in Gew.-% auf 100 Gew.-% aufaddieren.

2. Trockenmörtelformulierung nach Anspruch 1, **dadurch gekennzeichnet, daß** als redispergierbare Polymerpulver d) solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide enthalten sind.

3. Trockenmörtelformulierung nach Anspruch 1 oder 2, **dadurch gekennzeichnet, daß** als Antioxidantien e) ein oder mehrere aus der Gruppe umfassend sterisch gehinderte Phenole oder Hydrochinone, aromatische Amine, Organoschwefelverbindungen, Phosphite und Phosphonite enthalten sind.

4. Trockenmörtelformulierung nach Anspruch 1 mit
a) 8 bis 50 Gew.-% Zement,
b) 40 bis 90 Gew.-% ein oder mehrere Füllstoffe aus der Gruppe umfassend Calciumcarbonat und/oder Quarzsand,
c) 0.05 bis 0.8 Gew.-% ein oder mehrere Verdickungsmittel aus der Gruppe umfassend Celluloseether, modifizierte Celluloseether, Polyvinylalkohole, acetalisierte und/oder hydrophob modifizierte Polyvinylalkohole,
d) 1 bis 10 Gew.-% mit Polyvinylalkohol stabilisierte Redispersionspulver auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide, und mit
e) 0.001 bis 0.1 Gew.-%, eines oder mehrerer Antioxidantien aus der Gruppe der sterisch gehinderte Phenole oder Hydrochinone, aromatische Amine, Organoschwefelverbindungen, Phosphite und Phosphonite,
jeweils bezogen auf das Gesamtgewicht des Trockenmörtels.

5. Verfahren zur Herstellung von Trockenmörtelformulierungen gemäß Anspruch 1 bis 4 mittels Vermischen der Komponenten a) bis e) in herkömmlichen Pulvermischvorrichtungen.

6. Verfahren zur Herstellung von Trockenmörtelformulierungen gemäß Anspruch 1 bis 4, wobei das Antioxidans e) vorab dem Redispersionspulver d) oder bei der Sprühtrocknung zur Herstellung des Redispersionspulvers d) zugegeben wird, und anschließend mit den übrigen Komponenten des Trockenmörtels vermischt wird.

7. Verwendung der Trockenmörtelformulierungen gemäß Anspruch 1 bis 4 zur Herstellung von Mörtelmassen für Klebemittel oder Beschichtungsmittel.

8. Verwendung gemäß Anspruch 7 zur Herstellung von Mörtelmassen für Fliesenkleber.

9. Verwendung gemäß Anspruch 7 zur Herstellung von Mörtelmassen für Klebemittel zur Verklebung von Wärmedämmplatten und Schallschutzplatten.

10. Verwendung gemäß Anspruch 7 zur Herstellung von Mörtelmassen für Armierungsmassen für Wärmedämmverbundsysteme.

11. Verwendung gemäß Anspruch 7 zur Herstellung von Mörtelmassen für Spachtelmassen.

12. Verwendung gemäß Anspruch 7 zur Herstellung von Mörtelmassen für Dichtungsschlämmen.

13. Verwendung der Trockenmörtelformulierungen gemäß Anspruch 1 bis 3 zur Herstellung von Mörtelmassen für gipshaltige Zusammensetzungen wie Gipsputzen und Gipsspachtelmassen.

## Claims

1. Dry mortar formulations comprising
a) from 0.5 to 80% by weight of hydraulic binder,
b) from 0 to 97% by weight of fillers,
c) from 0 to 3.5% by weight of thickeners,
d) from 1.0 to 80% by weight of redispersible polymer powder,
**characterized in that**
e) from 0.0001 to 1.0% by weight of one or more compounds from the group of antioxidants is present based in each case on the overall weight of the dry mortar, the percentages by weight adding up to 100% by weight.

2. Dry mortar formulation according to Claim 1, **characterized in that** it comprises as redispersible polymer powders d) those based on one or more monomers from the group of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes, and vinyl halides.

3. Dry mortar formulation according to Claim 1 or 2, **characterized in that** it comprises as antioxidants e) one or more from the group consisting of sterically hindered phenols or hydroquinones, aromatic amines, organosulphur compounds, phosphites and phosphonites.

4. Dry mortar formulation according to Claim 1 comprising
a) from 8 to 50% by weight of cement,
b) from 40 to 90% by weight of one or more fillers from the group consisting of calcium carbonate and/or quartz sand,
c) from 0.05 to 0.8% by weight of one or more thickeners from the group consisting of cellulose ethers, modified cellulose ethers, polyvinyl alcohols, acetalized and/or hydrophobically modified polyvinyl alcohols,
d) from 1 to 10% by weight of polyvinyl-alcohol-stabilized redispersible powder based on one or more monomers from the group consisting of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes, and vinyl halides, and
e) from 0.001 to 0.1% by weight of one or more antioxidants from the group consisting of sterically hindered phenols or hydroquinones, aromatic amines, organosulphur compounds, phosphites and phosphonites, based in each case on the overall weight of the dry mortar and adding up to 100% by weight.

5. Process for preparing dry mortar formulations according to any of Claims 1 to 4 by mixing components a) to e) in conventional powder mixers.

6. Process for preparing dry mortar formulations according to any of Claims 1 to 4, wherein the antioxidant e) is added beforehand to the redispersible powder d) or added during spray drying to prepare the redispersible powder d), and is subsequently mixed with the other components of the dry mortar.

7. Use of dry mortar formulations according to any of Claims 1 to 4 for preparing mortar compounds for adhesives or coating materials.

8. Use according to Claim 7 for preparing mortar compounds for tile adhesives.

9. Use according to Claim 7 for preparing mortar compounds for adhesives for bonding insulation panels and soundproofing panels.

10. Use according to Claim 7 for preparing mortar compounds for reinforcing compounds for exterior insulation and finish systems.

11. Use according to Claim 7 for preparing mortar compounds for trowelling compounds.

12. Use according to Claim 7 for preparing mortar compounds for grouts.

13. Use of the dry mortar formulations according to any of Claims 1 to 3 for preparing mortar compounds for gypsum compositions such as gypsum plasters and gypsum trowelling compounds.

## Revendications

1. Compositions de mortier sec, contenant
a) 0,5 à 80 % en poids de liant hydraulique,
b) 0 à 97 % en poids de charges,
c) 0 à 3,5 % en poids d'épaississant
d) 1,0 à 80 % en poids de poudre de polymère redispersable,
**caractérisées en ce que**
e) 0,0001 à 1,0 % en poids d'un ou plusieurs composés choisis dans le groupe des antioxydants sont contenus, chaque fois par rapport au poids total du mortier sec et les données en % en poids faisant au total 100 % en poids.

2. Composition de mortier sec selon la revendication 1, **caractérisée en ce qu'**en tant que poudre de polymère redispersable d), sont contenues celles à base d'un ou plusieurs monomères choisis dans le groupe comprenant les esters vinyliques d'acides alkylcarboxyliques ramifiés ou non ramifiés ayant de 1 à 15 atomes de carbone, les esters d'acide méthacrylique et les esters d'acide acrylique avec des alcools ayant de 1 à 10 atomes de carbone, les composés vinylaromatiques, les oléfines, les diènes et les halogénures de vinyle.

3. Composition de mortier sec selon la revendication 1 ou 2, **caractérisée en ce qu'**en tant qu'antioxydants e) sont contenues une ou plusieurs substances choisies dans le groupe comprenant des phénols ou des hydroquinones à empêchement stérique, des amines aromatiques, des composés organiques soufrés, des phosphites et des phosphonites.

4. Composition de mortier sec selon la revendication 1, comportant
a) 8 à 50 % en poids de ciment,
b) 40 à 90 % en poids d'une ou plusieurs charges choisies dans le groupe comprenant le carbonate de calcium et/ou le sable quartzeux,
c) 0,05 à 0,8 % en poids d'un ou plusieurs épaississants choisis dans le groupe comprenant les éthers de cellulose, les éthers de cellulose modifiés, les poly(alcool vinylique)s, les poly(alcool vinylique)s acétalisés et/ou à modification hydrophobe,
d) 1 à 10 % en poids de poudre redispersable stabilisée avec du poly(alcool vinylique), à base d'un ou plusieurs monomères choisis dans le groupe comprenant les esters vinyliques d'acides alkylcarboxyliques ramifiés ou non ramifiés ayant de 1 à 15 atomes de carbone, les esters d'acide méthacrylique et les esters d'acide acrylique avec des alcools ayant de 1 à 10 atomes de carbone, les composés vinylaromatiques, les oléfines, les diènes et les halogénures de vinyle, et comportant e) 0,001 à 0,1 % en poids d'un ou plusieurs antioxydants choisis dans le groupe des phénols ou des hydroquinones à empêchement stérique, des amines aromatiques, des composés organiques soufrés, des phosphites et des phosphonites,
chaque fois par rapport au poids total du mortier sec.

5. Procédé pour la préparation de compositions de mortier sec selon l'une quelconque des revendications 1 à 4, par mélange des composants a) à e) dans des dispositifs classiques de mélange de poudres.

6. Procédé pour la préparation de compositions de mortier sec selon l'une quelconque des revendications 1 à 4, dans lequel l'antioxydant e) est ajouté au préalable à la poudre redispersable d) ou lors du séchage par atomisation dans la préparation de la poudre redispersable d), et ensuite est mélangé avec les autres composants du mortier sec.

7. Utilisation des compositions de mortier sec selon l'une quelconque des revendications 1 à 4, pour la production de matières de mortier pour des colles ou des matières de revêtement.

8. Utilisation selon la revendication 7, pour la production de matières de mortier pour colle pour carreaux.

9. Utilisation selon la revendication 7, pour la production de matières de mortier pour colle destinée au collage de panneaux d'isolation thermique et de panneaux d'insonorisation.

10. Utilisation selon la revendication 7, pour la production de matières de mortier pour matière d'armature pour des systèmes composites d'isolation thermique.

11. Utilisation selon la revendication 7, pour la production de matières de mortier pour mastics.

12. Utilisation selon la revendication 7, pour la production de matières de mortier pour suspensions d'étanchéité.

13. Utilisation des compositions de mortier sec selon l'une quelconque des revendications 1 à 3, pour la production de matières de mortier pour des compositions contenant du plâtre, telles que des enduits au plâtre et des mastics au plâtre.
